Europäisches Patentamt

European Patent Office

Office européen des brevets

(19)

(11) Veröffentlichungsnummer: **0 140 263**

**A1**

(12) **EUROPÄISCHE PATENTANMELDUNG**

(21) Anmeldenummer: 84112360.7

(22) Anmeldetag: 13.10.84

(51) Int. Cl.⁴: **A 01 C 5/06**
**A 01 C 7/20**

(30) Priorität: 28.10.83 US 546700

(43) Veröffentlichungstag der Anmeldung:
08.05.85 Patentblatt 85/19

(84) Benannte Vertragsstaaten:
DE FR GB

(71) Anmelder: DEERE & COMPANY
1 John Deere Road
Moline Illinois 61265(US)

(72) Erfinder: Hartwig, Donald Richard
2013 36th Street
Rock Island Illinois 61201(US)

(74) Vertreter: Sartorius, Peter et al,
DEERE & COMPANY European Office, Patent
Department Postfach 503 Steubenstrasse 36-42
D-6800 Mannheim 1(DE)

(54) Sävorrichtung für eine Sämaschine.

(57) Eine Sämaschine ist mit einer Sävorrichtung (10) ausgerüstet, die eine vertikal verschwenkbare Zudeckvorrichtung (17) aufweist. Damit für die Zudeckvorrichtung (17) der Anpreßdruck auf den Boden verändert werden kann, ist ein vertikal verschwenkbarer Tragarm (18) der Zudeckvorrichtung über eine Zugfeder (37) mit einem am Rahmen angeordneten Hebel (20) der Sämaschine verbunden. Die auf den Rahmen einwirkende Zugkraft der Zugfeder (37) läßt sich über einen mit der Zugfeder (37) verbundenen und an dem Tragarm (18) schwenkbar gelagerten, in verschiedenen Rastpositionen feststellbaren Handhebel (27) verändern.

FIG. 2

EP 0 140 263 A1

## Sävorrichtung für eine Sämaschine

Die Erfindung bezieht sich auf eine Sävorrichtung für eine Sämaschine mit einem an einem Rahmen der Sävorrichtung angeschlossenen, vertikal verschwenkbaren Tragarm mit einer Achse zur Aufnahme von drehbar gelagerten Bodenkontaktelementen, mittels derer die geöffneten Furchen zugedeckt werden, wobei der Tragarm über eine Stellvorrichtung in verschiedenen Positionen verstellbar und mittels einer Arretierungsvorrichtung in verschiedenen Stellungen festlegbar ist.

Es ist bereits eine Sävorrichtung der eingangs aufgeführten Art bekannt (US-PS 4 307 674), die an dem Hauptrahmen einer Sämaschine einen schwenkbar gelagerten Zwischenrahmen zur Aufnahme von Druckrollen und einer Furchenzudeckvorrichtung aufweist, die über einen Tragarm mit dem Zwischenrahmen der Sävorrichtung schwenkbar verbunden ist. Der Tragarm läßt sich über einen verschwenkbaren Hebel in mehreren Positionen arretieren, um somit die Höhe der Sävorrichtung zu variieren.

Demgegenüber ist es Aufgabe der Erfindung, die Sävorrichtung derart auszubilden und anzuordnen, daß bei zahlreichen nebeneinander angeordneten Sävorrichtungen der Anpreßdruck der zugehörigen Bodenkontaktelemente individuell einstellbar ist. Diese Aufgabe ist dadurch gelöst worden, daß die Stellvorrichtung an dem Tragarm beweglich gelagert und über eine Feder mit dem Rahmen mittel- oder unmittelbar verbunden ist. Durch die vorteilhafte Anordnung und Ausbildung der Stellvorrichtung und des Tragarmes zur Aufnahme der Bodenkontaktelemente, die Teil der Zudeckvorrichtung sind, wird gewährleistet, daß eine einwandfreie Zudeckung der einzelnen Furchen erfolgt, auch dann, wenn die Sämaschine auf unebenem Gelände arbeitet, da jeder einzelne Tragarm über eine zugehörige Feder nach unten gedrückt wird, so daß stets der optimale Anpreßdruck erreicht werden kann. Dies wird dadurch gewährleistet, daß die Stellvorrichtung zur Beeinflussung der Bodenkontaktelemente über die Feder mit dem Rahmen zur Aufnahme der Sävorrichtung mittel- oder unmittelbar verbunden ist. Um eine einwandfreie Anpassung der Bodenkontaktelemente zu gewährleisten, ist es vorteilhaft, daß die Arretierungsvorrichtung Rastöffnungen aufweist, die an eine Schlitzöffnung angeschlossen sind, in der ein Handhebel der Stellvorrichtung verschwenkbar aufgenommen und von da aus in die seitlichen Rastöffnungen einrastbar ist. Durch die am Tragarm vorgesehenen Rastöffnungen läßt sich der Handhebel ohne weiteres in verschiedenen Positionen arretieren und somit ein konstanter Anpreßdruck für das Bodenkontaktelement aufrechterhalten. Dabei ist es vorteilhaft, daß die Feder als Zugfeder ausgebildet und an einer Stelle unterhalb der Achse des Tragarmes an einen Hebelarm des Rahmens angeschlossen ist. Um eine gute Zudeckung der einzelnen Furchen zu gewährleisten, ist es vorteilhaft, daß die Bodenkontaktelemente Teil einer Zudeckvorrichtung sind und aus zwei V-förmig zueinander angeordneten, auf der Achse mittels Wälzlagern drehbar gelagerten Scheibenscharen bestehen, die über einen Handhebel verstellbar sind, wobei die Wälzlager mittels stirnseitig angeordneter Dichtelemente vor Verunreinigungen geschützt sind. Durch die Verwendung von Wälzlagern wird ein einwandfreies Drehen der Bodenkontaktelemente gewährleistet, auch wenn der Anpreßdruck relativ hoch ist.

Im folgenden wird die Erfindung anhand von lediglich einen Ausführungsweg darstellenden Zeichnungen näher erläutert. Es zeigt:

Fig. 1 eine perspektivische Darstellung einer Sävorrichtung,

Fig. 2 eine Teilansicht der Zudeckvorrichtung,

Fig. 3 eine Draufsicht der Zudeckvorrichtung gemäß Fig. 2,

Fig. 4   eine Rückansicht der Zudeckvorrichtung
mit dem zugehörigen Stellhebel,

Fig. 5   eine gekrümmte Achse zur Aufnahme der
Scheibenschare der Zudeckvorrichtung,

Fig. 6   eine ähnliche Ansicht wie in Fig. 5, jedoch mit einem Scheibenschar der Zudeckvorrichtung.

In der Zeichnung ist mit 10 eine Sävorrichtung bezeichnet,
die mit einer Zudeckvorrichtung 17 ausgerüstet ist. Die
Sävorrichtung 10 weist einen Rahmen bzw. Zwischenrahmen 11
auf, der aus zwei parallel zueinander verlaufenden Lenkern 12 besteht, die an einem in der Zeichnung nicht näher
dargestellten Hauptrahmen angeschlossen sind. Der Rahmen
11 dient zur Aufnahme eines Saatgutbehälters 13 sowie eines
Düngerbehälters 14, eines Furchenöffners 15 und einer Stützradvorrichtung 16, an die sich die Zudeckvorrichtung 17 anschließt.

Die Zudeckvorrichtung 17 weist einen Schwinghebel bzw. Tragarm 18 auf, der gelenkig an eine horizontal verlaufende
Achse des Rahmens 11 angeschlossen ist, wobei die Achse aus
Gelenkbolzen 19 gebildet sein kann, die den Tragarm 18 mit
dem Rahmen 11 verbinden. An dem Rahmen 11 ist im Bereich
des Gelenkbolzens 19 ein nach unten gerichteter Hebelarm
20 angeschlossen, der zum Anschluß einer Zugfeder 37 dient.

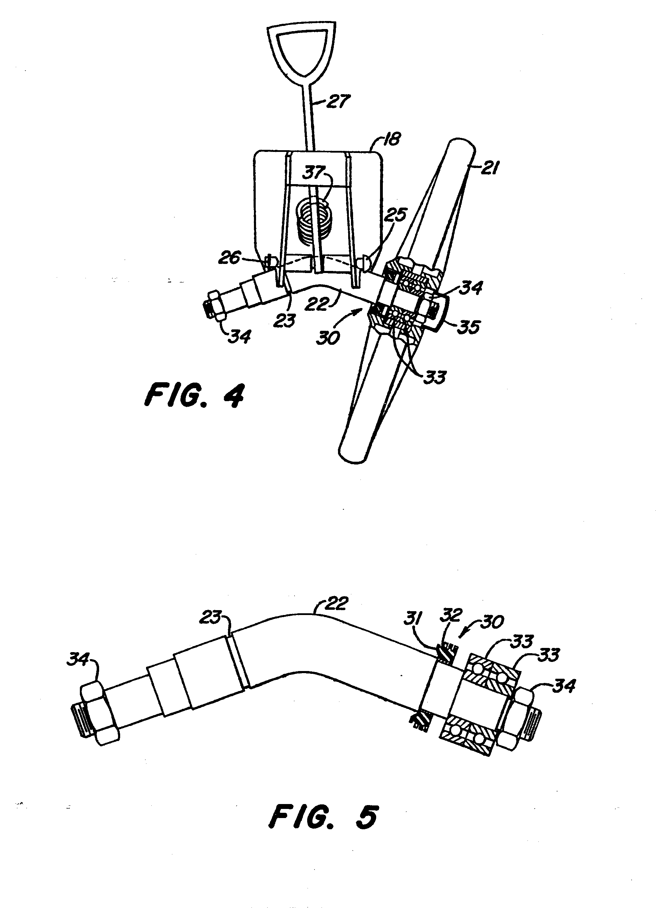

Die Zudeckvorrichtung 17 weist ferner zwei V-förmig zueinander angeordnete Scheibenschare 21 auf, die, wie insbesondere aus Fig. 4 hervorgeht, an einer V-förmig ausgebildeten Achse 22 drehbar gelagert sind. Wie aus Fig. 5 hervorgeht, weist die Achse 22 auf der linken Seite mit Bezug
auf Fig. 4 und 5 eine Ringnut 23 auf, so daß aus Gründen
der Montage der linke Teil der Achse 22 vom rechten Teil
der Achse wesentlich einfacher unterschieden werden kann.

Wie aus Fig. 4 hervorgeht, ist der Tragarm 18 mit einer Schlitzöffnung 24 zur Aufnahme der Achse 22 versehen. Der Tragarm 18 sowie die Achse 22 sind in der Stellung gemäß Fig. 4 miteinander fest verbunden, beispielsweise verschweißt.

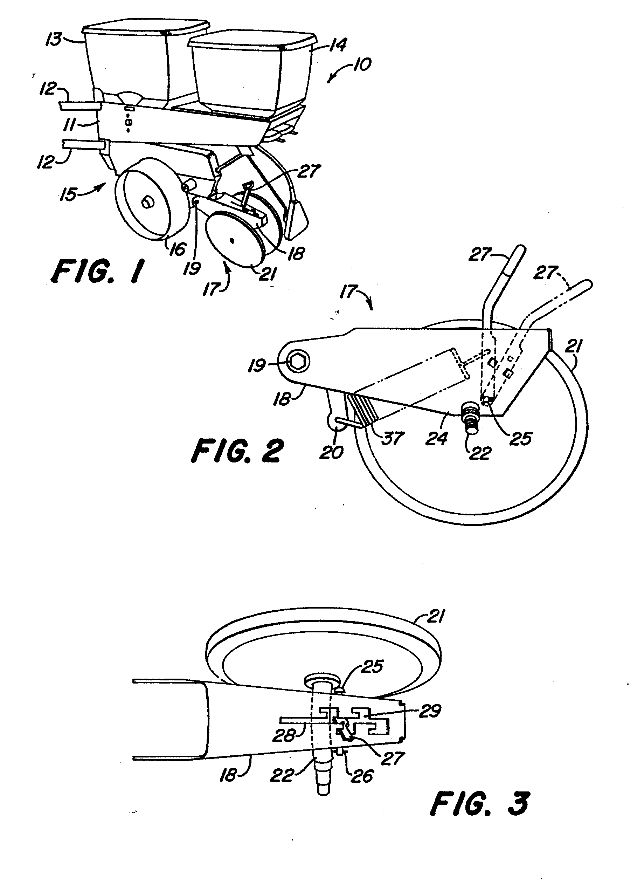

Im hinteren unteren Bereich des Tragarmes 18 ist ein Gelenkbolzen 25 vorgesehen, der durch die Öffnungen der beiden parallel zueinander verlaufenden Schenkel des Tragarmes 18 geführt und mittels einer Mutter 26 sowie eines Sicherungsstiftes gesichert ist. An den Gelenkbolzen 25 ist ein Handhebel 27 (siehe Fig. 1, 2 und 4) angeschlossen, der sich nach oben durch eine Schlitzöffnung 28 erstreckt, der in einer oberen, die beiden Schenkel des Tragarmes 18 miteinander verbindenden Wand vorgesehen ist. Der Handhebel 27 läßt sich von dem einen Ende der Schlitzöffnung 28 bis zum anderen Ende der Schlitzöffnung verstellen. Zahlreiche seitlich an die Schlitzöffnung 28 angeschlossene Aussparungen bzw. Rastöffnungen 29 dienen zur Aufnahme des Handhebels 27 in verschiedenen Schwenkpositionen. An den Handhebel 27 greift ferner das obere Ende der Zugfeder 37 an (siehe Fig. 2), die mit ihrem unteren Ende an den Hebelarm 20 angeschlossen ist und somit den Handhebel 27 nach hinten zieht.

Wie aus den Figuren 4 und 5 hervorgeht, weist die Achse 22 im Bereich der Lagerstelle des entsprechenden Scheibenschars 21 ein Dichtungselement 30 auf, das mit einem Metallring 31 ausgestattet ist, der einen Gummi bzw. einen Plastikring 32 aufnimmt. Neben dem Dichtungselement 30 befinden sich jeweils zwei nebeneinander angeordnete Wälzlager 33, die mittels einer Mutter 34 gesichert sind, die hierzu jeweils endseitig auf die Achse 22 aufgeschraubt ist. Eine Plastikkappe 35 deckt, wie aus Fig. 4 hervorgeht, die Mutter 34 ab und dient somit ferner auch als Dichtelement, so daß hierdurch Eindringen von Schmutzpartikeln in das Wälzlager 33 vermieden wird, während die Innenseite des Wälzlagers 33 durch das Dichtungselement 30 geschützt ist.

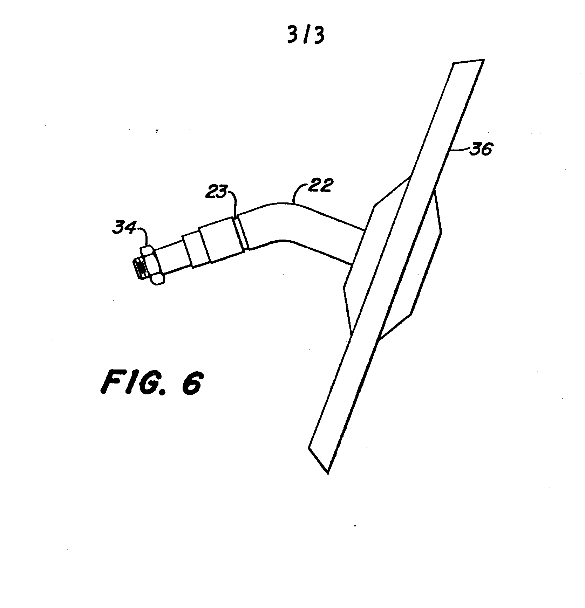

Ist es beispielsweise erwünscht, das aus Gummi hergestellte Scheibenschar 21 gemäß den Figuren 1 bis 4 durch ein gußeisernes Scheibenschar 36 gemäß Fig. 6 auszuwechseln, so ist dies auf einfache Weise möglich, indem die Kappe 35 entfernt wird, anschließend die Mutter 34 und dann das Scheibenschar 21, so daß dann das gußeiserne Scheibenschar 36 auf der Achse 22 montiert werden kann. Auf ähnliche Weise läßt sich dann später wieder das gußeiserne Scheibenschar 36 gegen das gummiartige Scheibenschar 21 auswechseln.

Im Arbeitseinsatz sind zahlreiche Sävorrichtungen 10 an dem Rahmen 11 angeschlossen, der mit dem Hauptrahmen verbunden ist. Danach lassen sich die notwendigen Arbeitsvorbereitungen treffen, beispielsweise der Saatgutbehälter 13 sowie der Düngerbehälter 14 entsprechend befüllen. Sind die entsprechenden Arbeitsvorbereitungen und Einstellungen an der Sävorrichtung vorgenommen worden, so kann der Handhebel 27 in eine der Aussparungen 29 einrasten, wobei die Stellung des Handhebels 27 von der Bodenbeschaffenheit abhängt. Bei schwereren Böden oder bei Böden mit hoher Feuchtigkeit bzw. wenn beide dieser Bedingungen eintreffen, ist es vorteilhaft, daß die Scheibenschare 21 mit großer Kraft auf den Boden einwirken. Hierzu wird der Handhebel 27 in eine in ausgezogenen Linien dargestellte Stellung gemäß Fig. 2 verschwenkt. Ist die gewünschte Stellung des Handhebels 27 erreicht, wird für jede entsprechende Sävorrichtung 10 eine entsprechende Verstellung des Handhebels 27 vorgenommen, so daß für alle Sävorrichtungen 10 und die zugehörigen Zudeckvorrichtungen 17 die gleichen Arbeitsbedingungen vorliegen und somit ein Zudecken der Furchen auf dieselbe Weise erfolgt. Wird die Sävorrichtung 10 beispielsweise bei mittelschweren Böden eingesetzt, so wird der Handhebel 27 in eine Mittelstellung gebracht, wobei der Handhebel 27 die in Fig. 2 in ausgezogenen Linien dargestellte Stellung einnimmt (siehe auch hierzu Fig. 3).

Bei leichten Böden kann es sogar auftreten, daß selbst bei Einnahme des Handhebels in einer äußerst linken Position (siehe Fig. 3) über das Scheibenschar 21 zu viel Druck auf die Furche ausgeübt wird, so daß hierdurch eine zu starke Verdichtung der Furche auftreten kann. Ist das der Fall, so wird der Handhebel 27 in der Schlitzöffnung 28 nach vorne in eine Stellung verschoben werden, in der keine Aussparungen 29 vorliegen. Hierdurch wird gewährleistet, daß die Zudeckvorrichtung 17 schwimmend über der Furche geführt wird, wobei lediglich die Schwerkraft die Abwärtsverstellung der Zudeckvorrichtung 17 bewirkt, so daß keine zusätzlichen Kräfte, beispielsweise die Kräfte der Feder 37, auf die Zudeckvorrichtung einwirken.

**DEERE & COMPANY**

EUROPEAN OFFICE
       – 7 –
     ₍ **0140263**

<u>Patentansprüche</u>

1. Sävorrichtung (10) für eine Sämaschine mit einem an einem Rahmen (11) der Sävorrichtung angeschlossenen, vertikal verschwenkbaren Tragarm (18) mit einer Achse (22) zur Aufnahme von drehbar gelagerten Bodenkontaktelementen (Scheibenschar 21), mittels derer die geöffneten Furchen zugedeckt werden, wobei der Tragarm (18) über eine Stellvorrichtung (Handhebel 27) in verschiedenen Positionen verstellbar und mittels einer Arretierungsvorrichtung in verschiedenen Stellungen festlegbar ist, dadurch gekennzeichnet, daß die Stellvorrichtung (Handhebel 27) an dem Tragarm (18) beweglich gelagert und über eine Feder (37) mit dem Rahmen (11) mittel- oder unmittelbar verbunden ist.

2. Vorrichtung nach Anspruch 1, dadurch gekennzeichnet, daß die Arretierungsvorrichtung Rastöffnungen (29) aufweist, die an eine Schlitzöffnung (28) angeschlossen sind, in der ein Handhebel (27) der Stellvorrichtung verschwenkbar aufgenommen und von da aus in die seitlichen Rastöffnungen einrastbar ist.

3. Vorrichtung nach Anspruch 1 oder 2, dadurch gekennzeichnet, daß die Feder als Zugfeder (37) ausgebildet und an einer Stelle unterhalb der Achse (Gelenkbolzen 19) des Tragarmes (18) an einen Hebelarm (20) des Rahmens (11) angeschlossen ist.

4. Vorrichtung nach einem oder mehreren der vorhergehenden Ansprüche, dadurch gekennzeichnet, daß die Bodenkontaktelemente Teil einer Zudeckvorrichtung (17) sind und aus zwei V-förmig zueinander angeordneten, auf der Achse (22) mittels Wälzlagern drehbar gelagerten Scheibenscharen (21) bestehen, die über einen Handhebel (27) verstellbar sind, wobei die Wälzlager mittels stirnseitig angeordneter Dichtelemente (30, Kappe 35) vor Verunreinigungen geschützt sind.

1/3

**FIG. 1**

**FIG. 2**

**FIG. 3**

213

FIG. 4

FIG. 5

0140263

FIG. 6

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 009 668 (R.W. BRASS et al.)<br>* Spalte 4, Zeilen 3-17 * | 1 | A 01 C 5/06<br>A 01 C 7/20 |
| A | | 4 | |
| | --- | | |
| Y | FR-A-2 471 125 (AMAZONEN-WERKE H. DREYER GMBH & CO. KG.)<br>* Seite 5, Zeilen 10-17; Figuren 1, 2 * | 1 | |
| A | | 2,3 | |
| | --- | | |
| Y | DE-B-2 921 183 (DEERE & CO.)<br>* Spalte 5; Zeile 64 - Spalte 6, Zeile 4; Figur 3 * | 1 | |
| | | | RECHERCHIERTE SACHGEBIETE (Int. Cl.4) |
| A | | 2 | A 01 C 5/00<br>A 01 C 7/00 |
| | --- | | |
| D,A | US-A-4 307 674 (M.D. JENNINGS et al.)<br>* Figur 1 * | 1 | |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 19-12-1984 | WUNDERLICH J E |